# EUROPÄISCHE PATENTSCHRIFT

(11) **EP 1 293 285 B1**
(45) Veröffentlichungstag und Bekanntmachung des Hinweises auf die Patenterteilung: **12.09.2007**
(21) Anmeldenummer: 02405529.5
(22) Anmeldetag: 25.06.2002
(51) Int. Cl.: B23K 11/00

(54) **Verfahren zur Montage eines Prallblechs**
Impact sheet mounting method
Méthode de montage d'une tôle d'impact

(30) Priorität: 05.07.2001 CH 12432001
(43) Veröffentlichungstag der Anmeldung: 19.03.2003
(73) Patentinhaber: Alstom Technology Ltd, 5400 Baden (CH)
(72) Erfinder: Fried, Reinhard, 5415 Nussbaumen (CH); London, Richard, NE20 9EW, Newcastle upon Tyne (GB); Marx, Peter, 5413 Birmenstorf (CH)

(56) Entgegenhaltungen:
- EP-A- 0 534 207
- DE-A- 4 307 198
- US-A- 3 770 933
- US-A- 3 982 850

## Beschreibung

### TECHNISCHES GEBIET

Die Erfindung bezieht sich auf ein Verfahren zur Montage eines Prallblechs an eine Leitschaufel gemäss dem Oberbegriff des Anspruchs 1.

### STAND DER TECHNIK

Aus dem Stand der Technik sind Turbinenschaufeln mit Kühlvorrichtungen zahlreich bekannt. Die Offenlegungsschrift DE 2 042 947 offenbart beispielsweise eine luftgekühlte Schaufel, die neben einem internen Kühlsystem in einem Hohlraum an einer Seite durch eine Prallkühlung gekühlt wird. Auch die Schriften US-A-4,040,767, EP-A1-534207, WO99/36675 oder US-A-6,120,249 zeigen derartige Kühlsysteme von Turbinenschaufeln. Daraus ist allgemein bekannt, die Plattform durch Prallkühlung zu kühlen. Ein Prall- oder Einsatzblech bzw. eine Kühlplatte wird auf einen Absatz der Plattform gelötet oder geschweisst und dient mittels Kühllöchern zur Prallkühlung der sich in einem bestimmten Abstand darunter befindenden Plattform.

Die Prallbleche müssen an ihrer Peripherie dicht mit der Plattform der Schaufel verbunden sein. Diese Abdichtung bzw. Befestigung kann in einer Ausführungsform mit einer Hochtemperaturlötung auf einer geometrisch bestimmten Auflagefläche an der Schaufel hergestellt werden. Diese Auflagefläche kann beispielsweise der Rand der Plattform oder eines Hohlraums oder auch vorhandene Rippen sein. Da diese Auflageflächen bzw. die Prallbleche oft durch den Herstellungsprozess nicht passgenau sind, hängt die Höhe des Lötspalts bzw. die Qualität der Lötvorbereitung von der jeweiligen Person ab, die das Anheften der Prallbleche in Handarbeit ausführt. Durch zusätzliche Schweisspunkte werden die Prallbleche an die Auflageflächen angepasst und gesichert. Durch diese Schweisspunkte soll der Lötspalt minimiert und unkontrollierte Wölbungen während des Lötens verhindert werden. Insbesondere die Punktschweissungen können jedoch im Abstand, sowie in der Anpresskraft variieren. Dies kann zu starken Schwankungen in der Höhe des Lötspaltes führen. Da die Einstellung des Lötspalts eine entscheidende Prozessgrösse für die Qualität der Lötung ist, ist die bisher angewendete Methode anfällig für Lötfehler.

In anderen Fällen hat man versucht, den Lötspalt durch Unterlegbleche oder Lötfolien einzustellen, die zwischen dem Prallblech und der Auflagefläche gelegt werden. Dieser Prozess ist jedoch sehr zeitaufwendig und erfordert ebenfalls Handarbeit.

### DARSTELLUNG DER ERFINDUNG

Der Erfindung liegt die Aufgabe zu Grunde, ein Verfahren zu schaffen, mit welchem die Höhe des Lötspalts zwischen dem Prallblech und den Auflageflächen an der Plattform einer Leitschaufel vereinheitlicht bzw. eingestellt werden kann.

Erfindungsgemäss wird die Aufgabe durch ein Verfahren gemäss dem Oberbegriff des Anspruchs 1 dadurch gelöst, dass das Prallblech mit Vertiefungen vorgefertigt wird und die Punktschweissungen an den Vertiefungen erfolgen.

Vorteilhaft wird durch das erfindungsgemässe Verfahren vermieden, dass die Höhe des Lötspalts durch die Anpresskraft während der Punktschweissungen bestimmt wird. Die Tiefe der Vertiefungen gibt die Höhe des Lötspalts vor.

Die Vertiefungen des Prallblechs können durch Stanzen beispielsweise gleichzeitig bei der Herstellung der Kühllöcher geformt werden, so dass kein zusätzlicher Arbeitsaufwand entsteht. Die Vertiefungen sollten so klein wie möglich gehalten werden, um unnötige Verluste in der Lötfläche zu vermeiden. Sie können beispielsweise einen Durchmesser von 1 bis 3 mm aufweisen. Die Höhe des Lötspalts kann beispielsweise in einem Bereich von 0.05 bis 0.1 mm liegen.

### KURZE BESCHREIBUNG DER ZEICHNUNG

Die Erfindung wird anhand der beigefügten Zeichnungen dargestellt, wobei
- **Fig. 1**: eine Turbinenschaufel mit einem Prallblech zeigt,
- **Fig. 2**: einen Schnitt durch Turbinenschaufel und Prallblech der Figur 1 gemäss der Linie II - II darstellt und
- **Fig. 3**: einen Schnitt durch eine Turbinenschaufel und Prallblech der Figur 1 gemäss der Linie III - III zeigt.

Es werden nur die für die Erfindung wesentlichen Elemente dargestellt. Gleiche Elemente sind in unterschiedlichen Zeichnungen mit gleichen Bezugszeichen versehen.

### WEG ZUR AUSFÜHRUNG DER ERFINDUNG

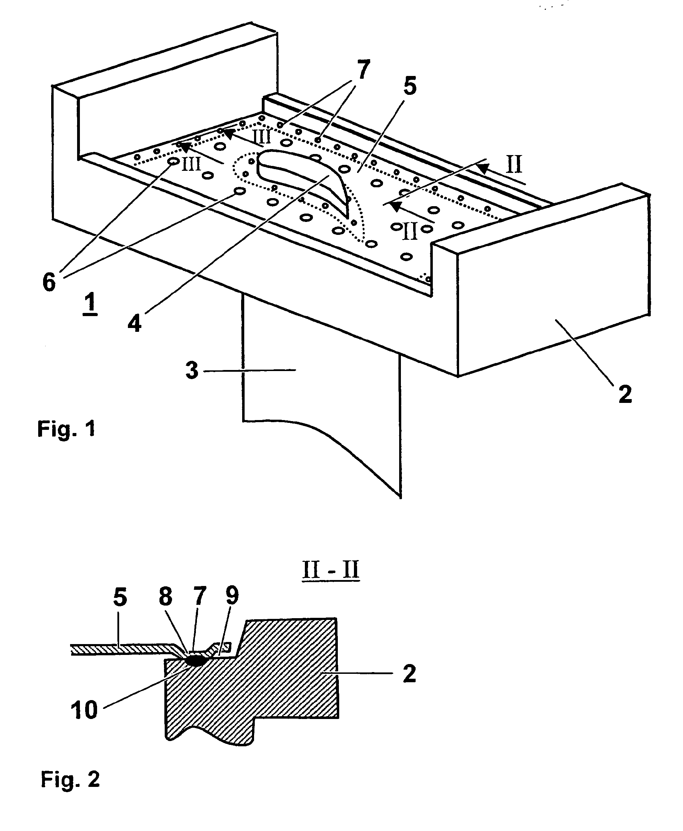

Die Figur 1 zeigt eine Leitschaufel 1 einer Gasturbine mit einer Plattform 2, einem Schaufelblatt 3 und einem Hohlraum 4. Eine solche Leitschaufel 1 besteht in der Regel aus einer Nickelbasis-Superlegierung. In den Hohlraum 4 der Leitschaufel 1 wird während des Betriebs der Turbomaschine Kühlluft eingeleitet. Der Hohlraum 4 ist auf an sich bekannte Weise mit einem internen Kühlsystem ausgestattet. Zusätzlich wird die Plattform 2 der dargestellten Leitschaufel 1 durch eine Prallkühlung gekühlt. Zu diesem Zweck wird ein Prallblech 5, welches Kühllöchern 6 enthält, auf eine Auflagefläche 10 der Plattform 2 mittels einer Hochtemperaturlötung mit einem Lötspalt 9 angelötet. Während des Betriebes der Leitschaufel 1 strömt Kühlluft auf das Prallblech 5, dieses strömt durch die Kühllöcher 6 und kühlt auf diese Weise die darunterliegende, sich in einem bestimmten Abstand befindende Plattform 2. Das Prallblech 5 wird ebenfalls in der Regel aus einer Nickelbasis-Superlegierung bestehen.

Vor der Hochtemperaturlötung wird das Prallblech 5 zusätzlich durch Punktschweissungen 7 am Rand auf eine Auflagefläche 10 an der Plattform 3 angeschweisst, um den Lötspalt 9 zu minimieren und unkontrollierte Wölbungen während des anschliessenden Lötens zu vermeiden. Diese Punktschweissungen 7 können zusätzlich auf Auflageflächen 10 um den Hohlraum 4 herum und auch an allen anderen, in der Figur 1 nicht dargestellten Auflageflächen 10 an der Plattform 2 erfolgen. Derartige Auflageflächen 10 können zum Beispiel vorhandene Rippen oder ähnliches sein. Diese Schweissung kann mit einem aus dem Stand der Technik bekannten Schweissverfahren erfolgen.

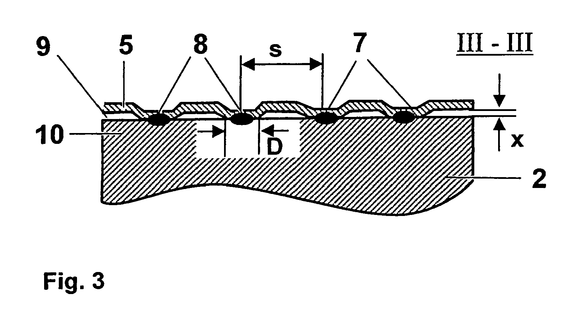

Wie aus den Figuren 2 und 3 ersichtlich, wird erfindungsgemäss das Prallblech 5 mit Vertiefungen 8 vorgefertigt. Die Punktschweissungen 7 erfolgen an diesen Vertiefungen 8. Durch die Vorfertigung der Prallbleche 5 mit den Vertiefungen 8 kann die Höhe x des Lötspalts 9 eingestellt werden. Diese Höhe x wird beispielsweise in einem Bereich von 0.05 bis 0.1 mm liegen. Die Form und die Lage der Vertiefungen 8 können entsprechend den Erfordernissen des Einzelfalls angebracht werden. Vorteilhaft sollten die Vertiefungen 8 so klein wie möglich gehalten werden, um unnötige Verluste in der Lötfläche zu vermeiden. Als Beispiel kann der Durchmesser D der Vertiefungen 8 somit in einem Bereich von 1 bis 3 mm liegen und in einem Abstand s von 5 bis 15 mm angebracht sein. Vorteilhaft wird durch die Vertiefungen vermieden, dass die Höhe des Lötspalts 9 durch die Anpresskraft während der Punktschweissungen 7 bestimmt wird.

Die Vertiefungen des Prallblechs können vorteilhaft durch Stanzen gleichzeitig bei der Herstellung der Kühllöcher geformt werden, so dass kein zusätzlicher Arbeitsaufwand entsteht.

### BEZUGSZEICHENLISTE

- 1: Leitschaufel
- 2: Plattform
- 3: Schaufelblatt
- 4: Hohlraum
- 5: Prallblech
- 6: Kühlloch
- 7: Punktschweissung
- 8: Vertiefung
- 9: Lötspalt
- 10: Auflagefläche

- s: Abstand zwischen Vertiefungen 8
- x: Höhe des Lötspalts 9
- D: Durchmesser der Vertiefungen 8

## Patentansprüche

1. Verfahren zur Montage eines Prallblechs (5) an eine Plattform (2) einer Leitschaufel (1) einer Gasturbine, wobei das Prallblech (5) an mindestens einer Auflagefläche (10) mittels Punktschweissungen (7) befestigt wird und danach an die Auflagefläche (10) mittels einer Hochtemperaturlötung an einem Lötspalt (9) an die Plattform (2) gelötet wird, und wobei das Prallblech (5) Kühllöcher (6) aufweist,
**dadurch gekennzeichnet, dass**
das Prallblech (5) mit Vertiefungen (8) vorgefertigt wird und die Punktschweissungen (7) an den Vertiefungen (8) erfolgen.

2. Verfahren nach Anspruch 1,
**dadurch gekennzeichnet, dass**
die Vertiefungen (8) des Prallblechs (5) durch Stanzen hergestellt werden.

3. Verfahren nach Anspruch 2,
**dadurch gekennzeichnet, dass**
die Vertiefungen (8) des Prallblechs (5) gleichzeitig mit den Kühllöchern (6) durch Stanzen hergestellt werden.

4. Verfahren nach einem der Ansprüche 1 bis 3,
**dadurch gekennzeichnet, dass**
das Prallblech (5) mit Vertiefungen (8), welche einen Durchmesser (D) von 1 bis 3 mm aufweisen, hergestellt wird.

5. Verfahren nach einem der Ansprüche 1 bis 3,
**dadurch gekennzeichnet, dass**
die Höhe (x) des Lötspalts (9) auf 0.05 bis 1 mm eingestellt wird.

## Claims

1. Method of fitting an impingement plate (5) to a platform (2) of a vane (1) of a gas turbine, the impingement plate (5) being fastened to at least one supporting surface (10) by means of spot welds (7) and then being brazed onto the supporting surface (10) to the platform (2) by means of high-temperature brazing at a brazing gap (9), and the impingement plate (5) having cooling holes (6), **characterized in that** the impingement plate (5) is prefabricated with recesses (8) and the spot welds (7) are executed at the recesses (8).

2. Method according to Claim 1, **characterized in that** the recesses (8) of the impingement plate (5) are produced by stamping.

3. Method according to Claim 2, **characterized in that** the recesses (8) of the impingement plate (5) are produced by stamping at the same time as the cooling holes (6).

4. Method according to one of Claims 1 to 3, **characterized in that** the impingement plate (5) is produced with recesses (8) which have a diameter (D) of 1 to 3 mm.

5. Method according to one of Claims 1 to 3, **characterized in that** the height (x) of the brazing gap (9) is set to 0.05 to 1 mm.

## Revendications

1. Procédé de montage d'une tôle de déviation (5) sur une plateforme (2) d'une aube de guidage (1) d'une turbine à gaz, dans lequel la tôle de déviation (5) est fixée sur au moins une surface d'appui (10) par soudage par points (7) et est ensuite brasée par brasage à haute température sur la surface d'appui (10) dans un interstice de brasage (9) de la plateforme (2), la tôle de déviation (5) présentant des trous de refroidissement (6),
**caractérisé en ce que** la tôle de déviation (5) est préfabriquée avec des creux (8) et **en ce que** les soudages par points (7) sont réalisés dans les creux (8).

2. Procédé selon la revendication 1, **caractérisé en ce que** les creux (8) de la tôle de déviation (5) sont réalisés par estampage.

3. Procédé selon la revendication 2, **caractérisé en ce que** les creux (8) de la tôle de déviation (5) sont réalisés par estampage en même temps que les trous de refroidissement (6).

4. Procédé selon l'une des revendications 1 à 3, **caractérisé en ce que** la tôle de déviation (5) est réalisée avec des creux (8) d'un diamètre (D) de 1 à 3 mm.

5. Procédé selon l'une des revendications 1 à 3, **caractérisé en ce que** la hauteur (x) de l'interstice de soudage (9) est ajusté entre 0,05 et 1 mm.
